# EUROPEAN PATENT SPECIFICATION

(11) **EP 4 441 720 B1**
(45) Date of publication and mention of the grant of the patent: **05.11.2025**
(21) Application number: 22823547.9
(22) Date of filing: 01.12.2022
(51) Int. Cl.: G06V 20/13, G06V 20/10, G06V 10/50, G06V 10/82

(54) **METHOD FOR NEAR REAL-TIME FLOOD DETECTION AT LARGE SCALE IN A GEOGRAPHICAL REGION COVERING BOTH URBAN AREAS AND RURAL AREAS AND ASSOCIATED COMPUTER PROGRAM PRODUCT**
VERFAHREN ZUR NAHEZU ECHTZEIT-FLUTERKENNUNG IN GROSSEM MASSSTAB IN EINEM GEOGRAFISCHEN BEREICH, DER SOWOHL URBANE ALS AUCH LÄNDLICHE BEREICHE ABDECKT, UND ZUGEHÖRIGES COMPUTERPROGRAMMPRODUKT
PROCÉDÉ DE DÉTECTION D'INONDATION EN TEMPS QUASI RÉEL À GRANDE ÉCHELLE DANS UNE RÉGION GÉOGRAPHIQUE COUVRANT À LA FOIS DES ZONES URBAINES ET DES ZONES RURALES ET PRODUIT PROGRAMME D'ORDINATEUR ASSOCIÉ

(30) Priority: 02.12.2021 LU 500947
(43) Date of publication of application: 09.10.2024
(73) Proprietor: Luxembourg Institute of Science and Technology, 4362 Esch-sur-Alzette (LU)
(72) Inventor: ZHAO, Jie, Wuhan, Hubei (CN); LI, Yu, Yichang, Hubei (CN); CHINI, Marco, Luxembourg (LU)
(74) Representative: Lavoix
(86) International application number: PCT/EP2022/084072
(87) International publication number: WO 2023/099665

(56) References cited:
- PENG BO ET AL: "Urban Flood Mapping With Bitemporal Multispectral Imagery Via a Self-Supervised Learning Framework", IEEE JOURNAL OF SELECTED TOPICS IN APPLIED EARTH OBSERVATIONS AND REMOTE SENSING, IEEE, USA, vol. 14, 28 December 2020 (2020-12-28), pages 2001 - 2016, XP011834078, ISSN: 1939-1404, [retrieved on 20210130], DOI: 10.1109/JSTARS.2020.3047677
- POPESCU DAN ET AL: "Flooded Area Segmentation from UAV Images Based on Generative Adversarial Networks", 2018 15TH INTERNATIONAL CONFERENCE ON CONTROL, AUTOMATION, ROBOTICS AND VISION (ICARCV), IEEE, 18 November 2018 (2018-11-18), pages 1361 - 1366, XP033480905, DOI: 10.1109/ICARCV.2018.8581341
- SAYAK PAUL ET AL: "Flood Segmentation on Sentinel-1 SAR Imagery with Semi-Supervised Learning", ARXIV.ORG, CORNELL UNIVERSITY LIBRARY, 201 OLIN LIBRARY CORNELL UNIVERSITY ITHACA, NY 14853, 25 October 2021 (2021-10-25), XP091068963
- PENG BO ET AL: "Patch Similarity Convolutional Neural Network for Urban Flood Extent Mapping Using Bi-Temporal Satellite Multispectral Imagery", REMOTE SENSING, vol. 11, no. 21, 24 October 2019 (2019-10-24), pages 2492, XP055942332, DOI: 10.3390/rs11212492

## Description

The present invention concerns methods for near real-time flood detection at large scale in a geographical region covering both urban areas and rural areas.

Flooding is a relatively common natural disaster, with profound impacts on populations and considerable economic consequences.

Satellite based Synthetic Aperture Radar (SAR) is the optimal sensor to detect floodwater, due to its capability to penetrate clouds and its independence of the sunillumination and weather conditions, in near real time, due to its relatively high revisit frequency of a region of interest, and at large scale, due to its capacity to image a wide geographical area at each image acquisition.

Over the past decades, SAR-based flood mapping methods has been rapidly developed thanks to the growing number of SAR satellite constellations with different sensor capabilities in terms of frequencies, polarizations and resolutions (e.g. Sentinel-1, COSMO SkyMed, TerraSAR-X, RADARSAT-2, ALOS-2 and GF3).

For floods impacting rural areas, in Chini, M., Hostache, R., Giustarini, L., & Matgen, P. "A hierarchical split-based approach for parametric thresholding of SAR images: Flood inundation as a test case". IEEE Transactions on Geoscience and Remote Sensing, 55(12), 6975-6988 (doi: 10.1109/TGRS.2017.2737664), a change-detection based flood mapping method has been introduced using two SAR intensity images in VV polarization assuming that the appearance of floodwater decreases the backscatter in SAR images: one image is acquired before the flood event while another is acquired after the flood event.

However, if known methods using SAR data perform well to detect flooding in rural areas (characterized by bare soil and sparse vegetation), they are not adapted for detecting flooding in urban areas (characterized by buildings). This is due to the fact that an urban area is a complex environment, causing for example double-bounce scattering between floodwater and walls of buildings, altering the echo received by the satellite-based SAR.

In Pulvirenti, L.; Chini, M.; Pierdicca, N. "InSAR Multitemporal Data over Persistent Scatterers to Detect Floodwater in Urban Areas: A Case Study in Beletweyne, Somalia", Remote Sens. 2021, 13, 37 (doi:10.3390/rs13010037), the authors show that a particular combination of SAR images allows better identification of floods in urban areas. More specifically, this particular combination is based on SAR images of amplitude and phase time evolution, the phase information being more relevant for flood identification in urban areas than the mere amplitude information.

Recently, in Pelich, R.; Chini, M.; Hostache, R.; Matgen, P.; Pulvirenti, L.; Pierdicca, N. "Mapping Floods in Urban Areas From Dual-Polarization InSAR Coherence Data", IEEE Geosci. Remote Sens. Lett. 2021, PP, 1-5, (doi:10.1109/LGRS.2021.3110132), SAR data acquired in VV (co-polarisation) and VH (cross-polarization) have been proved to be also informative for flood mapping in urban areas, since not only double-bounce scattering, but also multiple-bounces occur in urban areas depending on how the building facades are oriented with respect to line of sight of the satellite-based SAR.

Thus, if the detection of floods in rural areas is based on specific set of SAR-images, the detection of floods in urban areas is based on another specific set of SAR images.

In addition, with the development of computer vision, machine learning (ML) and deep learning (DL) methods have been employed for flood mapping.

In the article by Moya, L.; Mas, E.; Koshimura, S. "Learning from the 2018 Western Japan Heavy Rains to Detect Floods during the 2019 Hagibis Typhoon", Remote Sens. 2020, 12, 2244 (doi:10.3390/rs12142244), a traditional ML approach, i.e. support vector machine (SVM), is used to identify flooding in urban areas.

However, the gathering of training data for urban flood mapping is extremely time consuming and difficult to perform due to the scarcity of available labels.

It is the reason why in Li, Y.; Martinis, S.; Wieland, M. "Urban flood mapping with an active self-learning convolutional neural network based on TerraSAR-X intensity and interferometric coherence", ISPRS J. Photogramm. Remote Sens. 2019, 152, 178-191 (doi:10.1016/j.isprsjprs.2019.04.014), a temporal-ensembling active self-learning convolutional neural network (A-SL CNN) has been proposed.

However, in this article, the convolutional neural network has not been proved to be used in near real time to analyse a new event. Indeed, first SAR data of the new event have to be gathered; then, one part of the SAR data is used to train the neural network; finally, once the neural network has been properly parametrized, it is used to analyse the other part of the SAR data.

It is the reason why other approaches are encompassed. For example, in Li, Y.; Martinis, S.; Wieland, M.; Schlaffer, S.; Natsuaki, R. "Urban Flood Mapping Using SAR Intensity and Interferometric Coherence via Bayesian Network Fusion", Remote Sens. 2019, 11, 2231 (doi:10.3390/rs11192231), an unsupervised urban flood mapping method, combining SAR intensity and coherence images under the Bayesian network fusion framework is used to alleviate the scarcity of training data.

It then appears that Artificial Intelligence - Al seems to be a promising solution that one would appreciate using to deal with mixed areas combining both urban and rural areas.

However, such approaches stumble across the fact that flood detection in urban areas and flood detection in rural areas use different sets of SAR image. In addition, the labelled data required for the training stage are generally scarce, preventing the adoption of pre-trained Al models in near real-time scenarios for new events occurring in different areas of the world.

Document FENG BO et al, "Urban Flood Mapping With Bitemporal Multispectral Imagery Via a Self-Supervised Learning Framework", IEEE JOURNAL OF SELECTED TOPICS IN APPLIED EARTH OBSERVATIONS AND REMOTE SENSING, IEEE, USA,vol. 14, 28 December 2020 (2020-12-28), pages 2001-201 6, XP011834078,ISSN: 1939-1404, DOI: 10.1109/JSTARS.2020.3047677 discloses a urban flood detection algorithm involving a self-supervised learning framework for change detection in images taken before and after a flood.

The invention therefore aims at overcoming these problems by providing a method based on a unique Artificial Neural Network capable of identifying floods in regions covering both urban areas and rural areas, while taking as input a unique extended set of SAR images, and having the capacity to generalize for new events in different spatial locations.

To this end, the invention relates to a method for near real-time detection at large scale of an occurrence of floods in a geographical region covering both urban areas and rural areas and a computer program according to the appended claims.

The invention and its advantages will be better understood upon reading the following description of a preferred embodiment, provided solely by way of example, this description being made with reference to the accompanying drawings in which:
- Figure 1 shows a preferred embodiment both of a computer programmed device for the implementation of the method according to the invention and of the operation stage of the method according to the invention;
- Figure 2 shows the CNN unit of the device of figure 1;
- Figure 3 shows different modules of the CNN unit of figure 2;
- Figure 4 shows the urban aware modules of the CNN unit of figure 2;
- Figure 5 is a possible embodiment of the training stage of the CNN unit of figure 1; and,
- Figure 6 is a representation of a region of interest with the classification results providing by reference methods and the method according to the invention.

The method for near real-time flood detection according to the invention is based on a deep learning algorithm.

As such, the method according to the invention comprises a training stage and an operation stage.

The deep learning algorithm is trained with data corresponding to a geographical region covering both urban areas and rural areas so that the deep learning algorithm once trained is capable of analysing data corresponding to any kind of geographical region, i.e. geographical region covering urban areas and rural areas, but also geographical region covering urban areas only or rural areas only.

In the present document, the wording "urban area" refers to an area with houses or buildings, while the wording "rural area" refers to an area made of bare soil or scarce vegetation.

The method according to the invention is computer-implemented for example in a device properly programmed to realize said method.

The device can be used both for the training stage and the operating stage of the method.

### General structure of the device

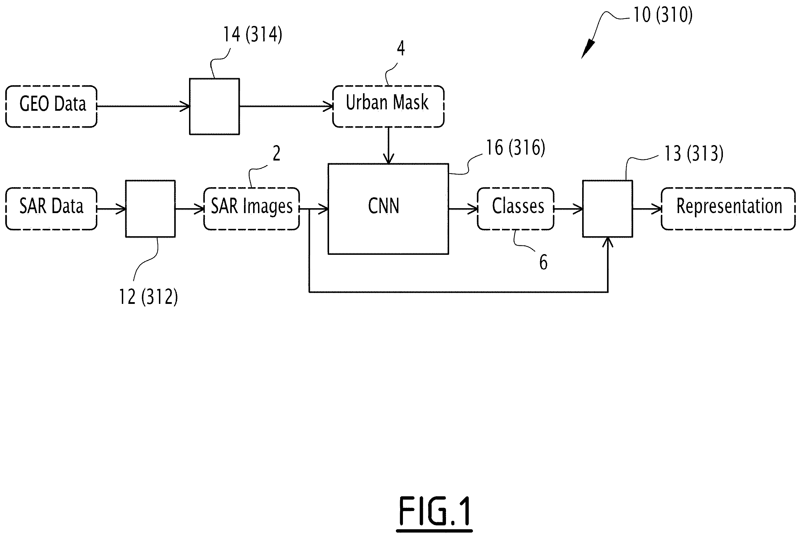

Figure 1 is a schematic representation of a preferred embodiment of a device for the implementation of the method according to the invention.

The device 10 comprises a CNN unit 16, an input data pre-processing unit 12, a configuration data pre-processing unit 14, and a representation unit 13.

The input data pre-processing unit 12 is adapted to apply image processing methods on SAR data to prepare a set of SAR images that will be transmitted to the CNN unit 16 as input data.

The SAR data are acquired by a SAR antenna on-board a satellite (such as Sentinel-1) and transmitted to the ground, where they are stored in a SAR database.

The device 10 is able to access this SAR database to retrieve SAR data.

In order to analyse a geographical region of interest - ROI, said ROI is subdivided into a plurality of adjacent cells, each cell being associated with a geographical area.

The SAR data retrieved by device 10 from the SAR database correspond to the observation of each cell of the ROI at time t0, at a first previous time t1, and at a second previous time t2, anterior to t1.

Time t0 is the current time, i.e. the time at which the last SAR data of a particular flood-affected ROI have been acquired. Times t1 and t2 are times at which SAR data of this same ROI have been acquired, but before the flood occurred.

For each time and for each cell of the ROI, the SAR data comprises a complex quantity in a co-polarization channel - VV channel and a complex quantity in a cross-polarization channel - VH channel. A complex quantity is characterized by its amplitude and its phase.

Unit 12 is adapted to compute a set of four images:
- A first SAR image of the intensity at time t0, by computing the modulus of the complex quantity for each pixel of the raw data at time t0;
- A second SAR image of the intensity at time t1, by computing the modulus of the complex quantity for each pixel of the raw data at time t1;
- A third SAR image of the coherence at time t0, by computing the complex cross-correlation between the SAR data at time t0 and the SAR data at time t1; and,
- A fourth SAR image of the coherence at time t1, by computing the complex cross-correlation between the SAR data at time t1 and the SAR data at time t2.

Preferably, unit 12 computes a first set of four images from SAR data obtained through a VV channel and a second set of four images from SAR data obtained through a VH channel. Thus the preferred set of SAR images inputted to the neural network comprises eight SAR images.

Each SAR image of this set of SAR images is subdivided into cells, each cell matching a corresponding cell of the ROI.

The urban mask corresponds to the ROI. It is subdivided into cells, each cell matching a corresponding cell of the ROI and consequently the SAR images.

Each cell of the urban mask is associated with a scalar.

Preferably, rather than being a mere binary, this scalar is a real number between 0 and 1, indicative of the likelihood that the corresponding cell of ROI is an urban area. Thus, this scalar is between 0 (the cell is not an urban area) and 1 (the cell is an urban area).

The unit 14 is adapted to compute an urban mask that will be transmitted to the CNN unit 16 as configuration data.

To perform this task, unit 14 has access to a GEO database with geographic data, GEO Data, such as for example an open source Urban Atlas dataset, indicating whether a cell of the ROI corresponds to an urban area.

Alternatively, unit 14 uses fuzzy logic and time-series of SAR intensity and coherence images. The urban mask is generated based on the assumption that the double-bounce effects exist in urban areas which can be measured by VV (and/or VH) intensity image(s). However, the high backscatter can also occur in the case of vegetation. In order to discriminate from this latter situation, SAR coherence images are also considered on the assumption that the buildings have stable structures leading to high coherence while the vegetation changes overtime causing relatively low coherence. That is to say, the urban mask can be generated using multi-temporal mean backscatter in VV (and/or VH) channel(s) and multi-temporal mean coherence in VV (and/or VH) channel(s).

For example, five SAR intensity images, respectively five SAR coherence images, acquired over a non-flood time period are averaged in order to obtain two intensity layers (in VV and VH respectively) and two coherence layers (in VV and VH respectively). To integrate these four layers, a standard S-shape membership function is applied, whose parameters X1 and X2 define minimum and maximum fuzzy thresholds.

In order to find automatically the suitable values of X1 and X2, a hierarchical split-based approach - HSBA is applied, assuming that the distributions of urban and non-urban areas can be parameterized as Gaussian distributions in the intensity layers and coherence layers respectively. Thus, with the parameterized Gaussian distributions, the X2 is assigned as the mean value of the probability density functions while the X1 is assigned as X2 minus three times standard deviations.

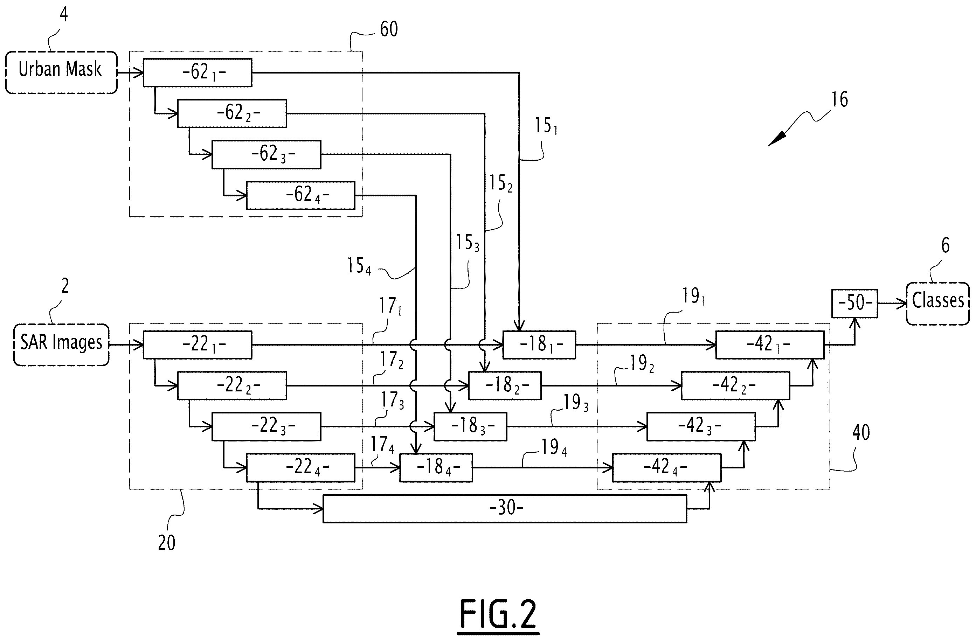

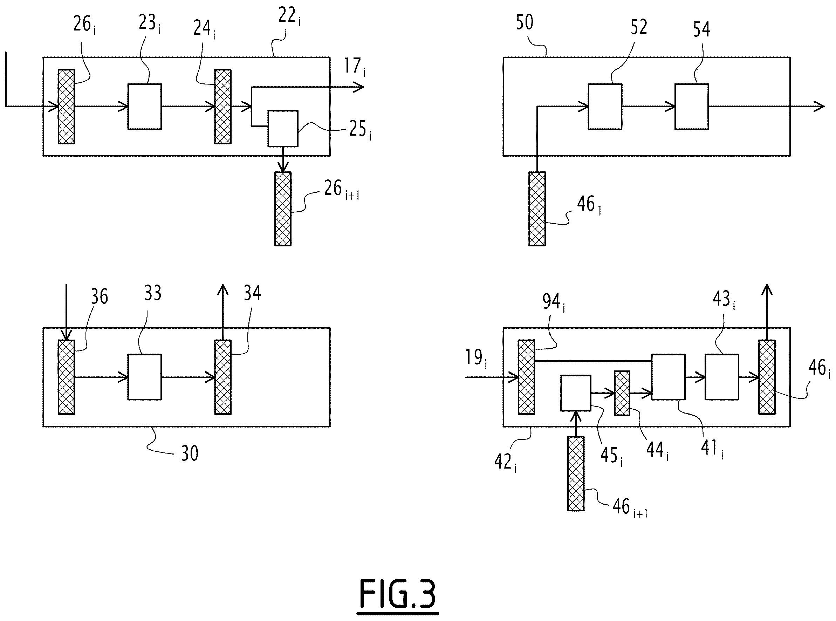

The CNN unit 16, whose structure will be presented in more details below in relation with figures 2 and 3, is a deep learning algorithm comprising configuration parameters and static parameters.

The training stage of the method allows to compute the optimal values of the static parameters.

In the operation stage of the method, the values of the configuration parameters of the CNN unit 16 are set based on the values of the urban mask, while the value of each static parameter has been fixed to its optimal value as determined during the training stage of the method according to the invention.

The CNN unit 16 takes as inputs the set of SAR images calculated by unit 12.

It is worth underlining that, instead of using the urban mask as an additional layer of the input data of a CNN unit, the urban mask is here used to dynamically configure the CNN Unit.

The CNN unit 16 classifies each cell of the ROI.

This classification is made along a set of classes comprising three classes, respectively a first class corresponding to a non-flooded area, a second class corresponding to a flooded rural area and a third class corresponding to a flooded urban area.

The representation unit 13 is adapted to superimpose, on each cell of an image of the ROI, the corresponding class as determined by the CNN unit 16, in order to obtain a representation of the ROI. Preferably, a color code is attributed to each class of the set of class (transparent for the first class, blue for the first class and red for the second class).

The representation thus obtained is advantageously displayed on a screen, to help an operator visualizing the flooded areas of the geographical region of interest and taking the appropriate actions.

### Structure of the CNN

Figures 2 and 3 illustrate a preferred structure of the CNN unit 16.

The architecture of the CNN unit 16 is an evolution of the well-known U-Net architecture.

The U-Net architecture is for example described in the article Ronneberger, O., Fischer, P., & Brox, T. (2015, October). U-net: Convolutional networks for biomedical image segmentation. In International Conference on Medical image computing and computerassisted intervention (pp. 234-241). Springer, Cham.

Thus, the CNN unit 16 comprises an encoder, 20, a connection layer 30, a decoder, 40, and an output layer 50, in series one with the other.

The encoder 20 takes as inputs the set of SAR images calculated by unit 12.

The connection layer 30 is located between the output of the encoder 20 and the input of the decoder 40.

The output layer 50, located at the output of the decoder 40, outputs the class for the cells of the ROI.

The encoder 20 consists of a plurality of successive convolutional layers, 22ᵢ, where i is an index between 1 and N, where N refers to the total number of layers. In figure 2, N is equal to 4.

The flow of information through the encoder 20 goes from the layers with the lower index (i.e. 22₁) to the layers with the higher index (i.e. 22₄).

Each layer is associated with a specific resolution.

As illustrated in figure 3, upper left, each layer 22ᵢ comprises a convolution block 23ᵢ in order to extract a feature map 24ᵢ from a down-scaled feature map 26ᵢ outputted from the previous layer 22ᵢ₋₁ of the encoder 20.

Preferably, the convolution block 23ᵢ realizes a double convolution, so as to successively apply a first 3x3 convolution, a first ReLu function, a second 3x3 convolution, and a second ReLu function on the down-scaled feature map 26ᵢ.

Layer 22ᵢ comprises a down-scaling block 25ᵢ to compute the down-scaled feature map 26ᵢ₊₁ for the next layer from the feature map 24ᵢ.

Preferably, the down-scaling block 25ᵢ realizes a sample-based discretization process such as max-pooling, in particular a 2x2 max-pool function.

As illustrated in figure 3, lower left, the connection layer 30, which connects the lower layer 22₄ of the encoder 20 and the lower layer 42₄ of the decoder 40, comprises a convolution block 33 in order to extract a feature map 34 from a down-scaled feature map 36 outputted from the encoder 20. In the embodiment disclosed down-scaled feature map 36 is the down-scaled feature map 24₄.

Preferably, the convolution block 33 realizes a double convolution, so as to successively apply a first 3x3 convolution, a first ReLu function, a second 3x3 convolution, and a second ReLu function on the down-scaled feature map 36.

The decoder 40 consists of a plurality of successive convolutional layers, 42ᵢ, where i is an index between 1 and N, where N refers to the total number of layers. N is equal to 4 in the present embodiment.

The flow of information through the decoder 40 goes from the layers with the higher index (i.e. 42₄) to the layers with the lower index (i.e. 42₁).

Each layer 42ᵢ is associated with a specific resolution, which is identical to the resolution of the layer 22ᵢ of the encoder 20 with the same index i.

As illustrated in figure 3, lower right, each layer 42ᵢ comprises an up-scaling block 45ᵢ taking the feature map 46ᵢ₋₁ at the output of the previous layer 42ᵢ₋₁ to determine an up-scaled feature map 44ᵢ.

Layer 42ᵢ also comprises a concatenation block 41ᵢ realizing a concatenation operation of the up-scaled feature map 44ᵢ and a refined feature map 94ᵢ.

Layer 42ᵢ then comprises a transposed convolution block 43ᵢ, realizing a transposed convolution on the output of the concatenation block 41ᵢ to obtain a feature map 46ᵢ. For example, the transposed convolution is a double convolution block, that successively applies a first 3x3 convolution, a first ReLu function, a second 3x3 convolution, and a second ReLu function.

As illustrated in figure 3, upper right, the output layer 50 performs a convolution operation and a filtering operation on the output of the decoder 40, i.e. feature map 46₁. Preferably, the corresponding blocks, 52 and 54, performs a 1x1 convolution followed by the application of a sigmoid function.

According to the U-Net structure, for a particular resolution, the feature map on the encoder side is transmitted to the encoder side along a skip connection.

According to the invention, along each skip connection, is provided an urban aware module 18ᵢ, that takes the feature map 24ᵢ computed by layer 22ᵢ of the encoder 20, along the skip connection input section 17ᵢ, and processes it in order to output, on the skip connection output section 19ᵢ, the refined feature map 94ᵢ used by the layer 42ᵢ of the encoder 40. Each urban aware module 18ᵢ is configured with an urban feature map 64ᵢ inputted along a skip connection configuration section 15ᵢ.

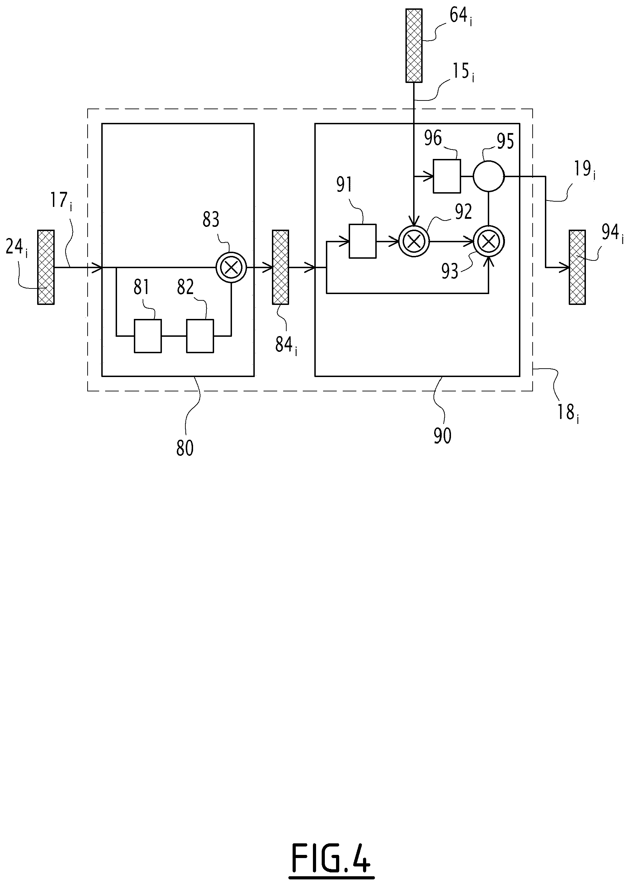

The urban aware modules 18ᵢ have the same structure. This structure will now be described by reference to figure 4.

In the preferred embodiment, one urban aware module 18ᵢ comprises a first submodule 80 and a second submodule 90.

The first submodule 80, also called channel attention submodule, takes the feature map 24ᵢ of layer 22ᵢ of the encoder 20 and processes it to output an intermediate feature map 84i.

For example, the feature map 24ᵢ goes through a global average pooling operation (block 81) to squeeze and aggregate the spatial dimensions of the input feature map. Then, it goes through a 1x1 convolution, a ReLu function, a 1x1 convolution and a sigmoid function (block 82). The result is a 1x1xC vector, where C is an integer indicative of the number of channels at the resolution under consideration.

The feature map 24ᵢ is then multiplied (block 83) by this 1x1xC vector to determine the intermediate feature map 84ᵢ. The 1x1xC vector applies different weights on the channels of the feature map 24ᵢ since each channel brings different information content.

The second submodule 90, also called normalization submodule, takes the intermediate feature map 84ᵢ and an urban mask feature map 64i and processes them to output the refined feature map 94ᵢ.

This second sub-module 90 effects a normalization on the intermediate feature map 84ᵢ considering the probabilistic urban mask. This normalization is generally composed of a scale factor component and a bias component.

For example, the intermediate feature map 84i goes through a block 91, applying successively a 3x3 convolution, a batch normalization and a ReLu function, to obtain a first tensor.

This first tensor is then multiplied (block 92) by the urban mask feature map 64i to obtain a second tensor, which is a scale factor.

Then the intermediate feature map 84i is multiplied by this second tensor (block 93) to obtain a third tensor, which is a scaled tensor.

The third tensor thus obtained is added (block 95) to a fourth tensor, which is a bias tensor.

The fourth tensor results from the application of a 3x3 convolution on the urban mask feature map 64i (block 96).

The output of block 95 is the refined feature map 94i.

Turning back to Figure 2, the manner to derive the urban mask feature maps 64ᵢ will be explained.

Each urban mask feature map 64i is derived from the urban mask 4.

To this aim, the CNN unit 16 comprises an urban encoder 60, which is preferably identical to encoder 20, except for the first layer 62ᵢ, since the number of layers inputted in encoder 20 (eight SAR images in the preferred embodiment) is different from the single layer inputted in the encoder 60. One simple solution is for example to stack N-times the urban mask to match the number of layers inputted in encoder 20.

This urban encoder 60 takes as input the urban mask 4 outputted by pre-processing unit 14. It applies the same transformations on the urban mask 4 than the encoder 20 on the SAR images 2 so as to extract, for each resolution, an urban mask feature map 64ᵢ. In this manner, the urban feature map 64ᵢ output by layer 62ᵢ exhibits the same resolution as the feature map 24ᵢ at the output of layer 24ᵢ of the encoder 20 (which is also the resolution of the feature map 46ᵢ at the output of layer 42ᵢ of the decoder 40).

The operations performed by each block of the encoder 20, the connection layer 30, the decoder 40, the output layer 50, the urban encoder 60 and the urban aware modules 18ᵢ involve a number of parameters (except blocks 93 and 95 which perform mere tensor multiplication or addition), called the static parameters of the CNN unit 16. The value of these static parameters is optimized and set through the training phase.

The urban mask 4 associated with an ROI defines, through the urban encoder 60, the values of a plurality of dynamical parameters (the urban mask feature maps 64ᵢ), that are used to define the scale and bias components at each resolution of the CNN unit 16. The CNN unit 16 is thus dynamically configured to specifically analyse a set of SAR images relative to said ROI during the operation stage.

The static parameters are optimized during the training stage of the method. They are frozen at the end of the training stage. They consequently are the same for each task of flood detection during the operation stage of the method, whatever the ROI is.

On the contrary, the dynamic parameters are set at the beginning of each task of the operating stage in order to improve the detection of flood in a particular ROI.

### Training stage 200

The training stage of the method consists in estimating the optimal values of the static parameters of the CNN unit 16.

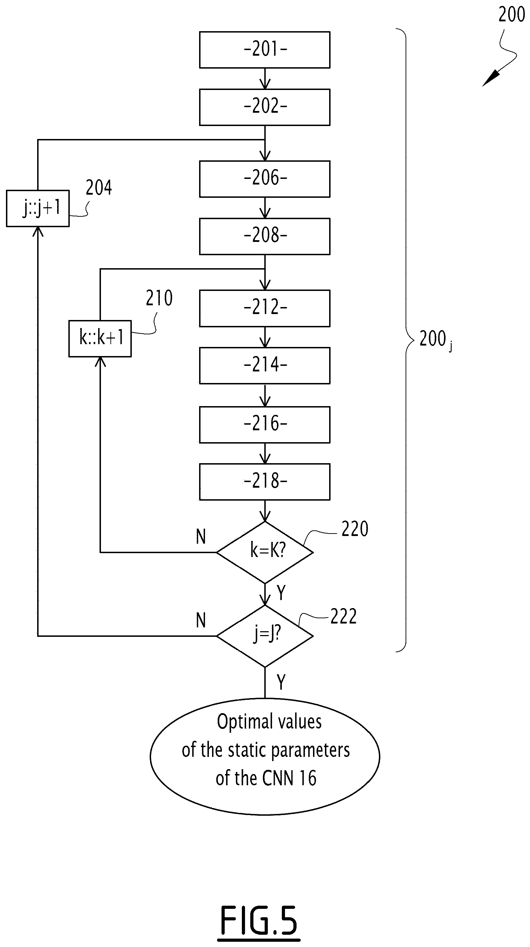

An embodiment of the training stage is illustrated in Figure 5.

The training stage 200 starts with step 201 of creating a training database. It stores batches. A batch is a set of SAR images of an ROI, these images being associated with the labels of each cell of said ROI. A label is the true value of the class of the corresponding cell. True values can be obtained for example from on the ground data collection. Furthermore, in order to increase the number of batches in the training database, known methods of data augmentation are also used.

An urban mask 4 for the ROI associated with the SAR images 2 of the training database is defined.

Then, step 202 consists in instantiating the values of the static parameters of the CNN unit 16 with initial values (e.g. drawn randomly) and the dynamical parameters with the urban map 4.

Then, the training stage 200 consists of iterating (loop 204) the process 200j, where j is an integer index. The j^{th} iteration of the process 200j constitutes an epoch of the training stage.

The epoch 200j starts with step 206 of creating a list Bⱼ. This step consists in applying a random algorithm to order the batches of the training database. The size of list Bⱼ is K (i.e. the number of batches in the training database).

Then, in step 208, the current values of the static parameters are read, and the current value of an index k is instantiated to the unit value.

The process 200j then enters a loop 210 on the value of an index k from 1 to K.

In step 212, list Bⱼ is parsed in an orderly fashion and the batch of index k is selected and inputted to the CNN unit 16.

During step 214, the outputs of the CNN unit 16 are computed with the current values of the static parameters and the dynamic parameters. The output are classes attributed to each cell of the ROI by the CNN unit 16.

In step 216, an error is calculated between the classes calculated in step 214 and the labels of the batch drawn in step 212. For example, this error is the average on all the cells of the ROI of the square of the difference between the class and the label for each cell.

Then, in step 218, the static parameters of the CNN unit 16 are simultaneously updated, preferably based on the use of the gradient backpropagation principle and an optimization rule (for example, the Adam algorithm).

In step 220, the current value of the index k is compared to its maximum value K, to check if there are still batches in the list Bⱼ.

If so, the current value of the index k is increased by one, before performing steps 212 to 218 again.

If not, all the batches in the training database having been used for training, the epoch 200ⱼ ends.

Then, at step 222, a criterion is tested to determine whether the training stage 200 has been completed. This criterion is for example a predefined number J of epochs for the learning phase. If the current value of index j is less than J, then index j is increased by one and the training stage proceeds to the next iteration 200j, repeating steps 206 (new ordering of the batches of the training database) through 220.

On the other hand, when the criterion of step 222 is met, the current values of the static parameters are frozen. The CNN unit 16 can be used in the operation stage 300.

### Operation stage 310

The operation stage 310 can be read on figure 1, since it consists in running the different modules of the device 10 for a particular ROI in order to detect in near-real time the occurrence of a flood.

In case of suspicion of a new flood event affecting a geographical region of the globe, SAR data of this region of interest -ROI are acquired and stored in the SAR database. The moment of acquisition defines the current time t0.

Module 12 is executed (step 312) to pre-process SAR data at the current time t0 and SAR data at previous times t1 and t2 of the ROI, and calculate a set of SAR images 2 corresponding to the ROI.

In step 314, module 14 is executed to pre-process the geographical data of the GEO database and calculate an urban mask 4 corresponding to the ROI.

Then, in a step 316, the CNN module 16, whose static parameters have been properly set during the training stage 200 and whose configuration parameters are set with the urban mask 4 of the ROI calculated at step 314, is executed on the set of SAR images 2 calculated at step 312. Classes are computed for each cell of the ROI.

Finally, in step 313, the reconstruction module 13 is executed to associate a colour with each class and to superimpose the coloured cells on an image of the ROI. The reconstruction image thus obtained may be displayed on a screen.

### Experimental results

Sentinel-1 Single Look Complex raw data, in VV/VH polarization channels, were acquired from the same orbit over different ROls.

The raw data were geocoded, calibrated and transformed to intensity (in dB) and coherence (linear). Interferometric coherence was estimated by a moving window of 9×9 pixels and a Goldstein filter with a size of 9×9 pixels was applied to radar interferograms to reduce noise. All intensity and coherence data were co-registered and geocoded to WGS1984 UTM with 20m spatial resolution.

According to the availability of reliable ground truth data, a first ROI with 1304×957 pixels in Houston (US) and a second ROI with 667×577 pixels in Iwaki (Japan) are selected as training dataset, while test ROIs in Beira (Mozambique) are selected as testing dataset.

For the preparation of the training database from the training dataset, a first ROI with 1304×957 pixels in Houston (US) is selected as training dataset. Besides, a 35cm resolution optical images acquired during the Houston (US) flood case are involved to manually label the pixels in flooded in rural areas (i.e. bare soils/sparsely vegetated areas) (FO), flooded urban areas (FU) and non-flooded areas (NF), respectively. The first ROI was split into patches with a size of 134×134 pixels and each patch has 50% overlapping with the adjacent patches. Then, data augmentation, i.e. random crop with a size of 128×128 pixels, random vertical and horizontal flips, random rotation (i.e. 90°, 180°, 270°) have been applied to create the training database.

The CNN unit 16 is trained with a batch size of 8 and used Adam Optimizer with initial learning rate 0.0001, momentum parameters β1=0.9, β2=0.999, and weight decay with coefficient 1e⁻⁴. The models were trained for 100 epochs.

The results are qualitatively and quantitatively analysed.

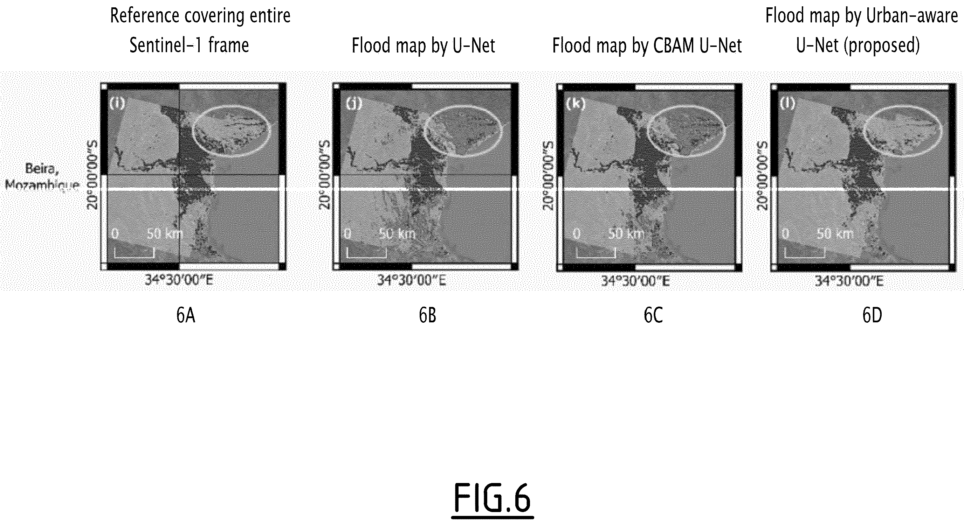

Figure 6 shows the comparison among the flood reference of the test ROI (6A), flood representation computed by U-Net (6B), flood representation computed by CBAM U-Net (6C) and the flood representation computed by the Urban-aware U-Net according to the present invention (6D).

The test ROI is the region of Beira (Mozambique). It is different from the first and second ROI used for the training stage of the neural network compared.

The U-Net is an original U-Net structure, i.e. with a direct skip connection between encoder and decoder layers.

The CBAM U-Net is an original U-Net structure adding a Convolutional Block Attention Module (CBAM) in each skip connection (cf. article by Woo, S., Park, J., Lee, J. Y., & Kweon, I. S. "CBAM: Convolutional block attention module", pp. 3-19, In Proceedings of the European conference on computer vision (ECCV) 2018).

In Figure 6, the overestimation of flooded urban areas in the Beira food event (in the green circle) is totally removed by the Urban-aware U-Net according of the invention, while the accuracy of the flooded rural areas remains the same by visual inspecting. Besides this qualitative evaluation, a quantitative evaluation has been performed using the Kappa coefficient, where 0 represents no agreement between reference and experimental results and 1 represents totally agreement between reference and experimental results: the Kappa coefficients of flood maps generated by U-Net and CBAM U-Net are 0.56 and 0.57, respectively, while the Kappa coefficient of the Urban-aware U-Net according of the invention increases to 0.81.

### Advantages and Alternative embodiments

The present method is capable of balancing the use of SAR images information acquired before and during the flood for urban areas and rural areas in the process of classifying each area of a ROI in terms of flooded/non flooded.

Since the CNN unit according to the invention is capable of separating, for a specific ROI, flooded areas from non-flooded areas, and urban flooded areas from flooded rural areas, it must be trained with a set of data corresponding to a geographical region affected by a flood covering both urban areas and rural areas. However, during the operation stage, the ROI analysed may be any geographical region, covering urban areas only, urban areas and rural areas, or rural areas only, with or without flood events.

The channel-wise attention is firstly applied to obtain representative information from each SAR channel, and then, the intermediate features extracted by channel-wise attention are further normalized using an urban mask. Alternatively, only the normalization using the urban mask is applied. This normalisation may involve a scale factor and/or bias.

It is worth highlighting that supervised methods previously described are using training and experimental datasets from the same distribution, i.e. the same ROI and the same flood event, which does not allow to generalize well for new geographical regions and new flood events. This is due to the scarcity of training data, especially for urban areas. Consequently, the prior art supervised methods cannot be applied in near-real time, because they require to first train the neural network before using it.

Alternatively, unsupervised methods are less efficient in near real time applications because they perform learning and prediction with the new acquired data and they still need an expert user to assign a semantic class to a cluster.

Finally, to robustly detect flood in urban and rural areas different sets of SAR features are needed.

The present invention offers solutions to these problems.

## Claims

1. A method for near real-time flood detection at large scale in a geographical region covering urban areas and rural areas, said method being computer-implemented, the geographical region being subdivided into a plurality of adjacent cells, **characterized in that** said method comprises a training stage and an operation stage, the operation stage comprising:
- pre-processing (312) Synthetic Aperture Radar - SAR data of the geographical region to determine a plurality of SAR images (2);
- defining (314) an urban mask (4) of the geographical region, said urban mask providing, for each cell, a likelihood that said cell is an urban area;
- applying (316) on the plurality of SAR images as input data, a deep learning classification algorithm, in order to compute, for each cell of the geographical region, a class (6) indicative that the corresponding cell is either a flooded urban area, a flooded rural area, or a non-flooded area,
the deep learning classification algorithm being structured as a fully convolutional neural network (16), the deep learning classification algorithm comprising dynamic parameters and static parameters, the values of the dynamic parameters being computed from the urban mask and the values of the static parameters being set with optimal values determined at the end of the training stage, the training stage being a supervised training stage.

2. The method according to claim 1, wherein the fully convolutional neural network has a U-Net structure, a skip connection at a given resolution between an encoder layer (22ᵢ) of an encoder of the U-Net structure and a corresponding decoder layer (42ᵢ) of a decoder of the U-Net structure comprising an urban aware module (18ᵢ), the urban aware module (18ᵢ) computing a refined feature map (94ᵢ) from a feature map (24ᵢ) and an urban mask feature map (64_i), the feature map (24ᵢ) being provided by the encoder layer, the refined feature map (94ᵢ) being applied to the decoder layer, and the urban mask feature map being derived from the urban mask.

3. The method according to claim 2, wherein the fully convolutional neural network further comprises an urban encoder (60) for computing the urban mask feature map (64ᵢ) for each resolution from the urban mask (4), the urban encoder being identical to the encoder (20) of the U-Net structure.

4. The method according to any one of claims 2 to 3, wherein the urban aware module (18ᵢ) at a given resolution comprises a normalization sub-module (90).

5. The method according to claim 4, wherein the normalization sub-module (90) introduces a scale factor on the feature map from the encoder layer.

6. The method according to claim 5, wherein the normalization sub-module (90) comprises:
- a first block (91) for applying on the feature map successively a 3x3 convolution, a batch normalization and a ReLu function to get a first tensor;
- a second block (92) for multiplying the urban mask feature map (64ᵢ) by the first tensor, to get a second tensor;
- a third block (93) for multiplying the feature map by the second tensor, to get a third tensor.

7. The method according to claim 6, wherein the normalization sub-module (90) introduces a bias on the feature map from the encoder layer.

8. The method according to claim 7, wherein the normalization sub-module (90) comprises:
- a fourth block (96) for applying a 3x3 convolution on the urban mask feature map (64ᵢ) to obtain a fourth tensor; and
- a fifth block (95) for adding the third and fourth tensors to obtain the refined feature map (94ᵢ).

9. The method according to any one of claims 2 to 8, wherein the urban aware module (18ᵢ) at a given resolution further comprises a channel attention sub-module (80) upstream the normalization sub-module (90), the channel attention sub-module (80) computing from the feature map provided by the encoder layer, an intermediate feature map, inputted to the normalization sub-module (80).

10. The method according to claim 9, wherein the channel attention sub-module (80) comprises:
- a first block (81) for squeeze and aggregate the spatial dimensions of the feature map and obtaining a first scalar;
- a second block (82) for applying on the first scalar a 1x1 convolution, a ReLu function, another 1x1 convolution and a sigmoid function to obtain a second vector;
- a third block (83) for multiplying the feature map (24ᵢ) by the second vector to determine the intermediate feature map (84ᵢ).

11. The method according to any one of claims 1 to 10, wherein the urban mask (4) is defined by processing geographical data of the geographical region.

12. The method according to any one of claims 1 to 10, wherein the urban mask (4) is defined by processing SAR data of the geographical region.

13. The method according to any one of claims 1 to 12, wherein the plurality of SAR images (2) comprises a set of SAR images made of :
- a first SAR image of intensity at a current time, defined as the modulus of the complex quantity of each pixel of the SAR data acquired at the current time;
- a second SAR image of intensity at a first previous time, defined as the modulus of the complex quantity of each pixel of the SAR data acquired at the first previous time;
- a third SAR image of coherence at the current time, defined as the complex cross-correlation between the SAR data acquired at the current time and the SAR data acquired at the first previous time; and,
- a fourth SAR image of coherence at the first previous time, defined as the complex cross-correlation between the SAR data acquired at the first previous time and the SAR data acquired at a second previous time, anterior to the first previous time.

14. The method according to claim 13, wherein the set of SAR images of the plurality of SAR images (2) is a first set of SAR images computed from co-polarisation SAR data and wherein the plurality of SAR images further comprises a second set of SAR images, similar to the first set of SAR image, but computed from cross-polarization SAR data.

15. Computer program product comprising a computer readable program for causing a computer to realize a method for near real-time flood detection in a geographical region covering both urban areas and rural areas according to any one of the claims 1 to 14.

## Patentansprüche

1. Verfahren zur Erkennung von Überschwemmungen in nahezu Echtzeit in großem Maßstab in einer geographischen Region, die städtische Gebiete und ländliche Gebiete abdeckt, wobei das Verfahren computerimplementiert ist und die geographische Region in eine Vielzahl von benachbarten Zellen unterteilt ist, **dadurch gekennzeichnet, dass** das Verfahren eine Trainingsstufe und eine Betriebsstufe umfasst, die Betriebsstufe umfassend:
- Vorverarbeiten (312) von Daten eines Synthetic Aperture Radars - SAR der geografischen Region, um eine Vielzahl von SAR-Bildern (2) zu bestimmen;
- Definieren (314) einer städtischen Maske (4) der geografischen Region, wobei die städtische Maske für jede Zelle eine Wahrscheinlichkeit bereitstellt, dass die Zelle ein städtisches Gebiet ist;
- Anwenden (316) eines Deep-Learning-Klassifizierungsalgorithmus auf die Vielzahl von SAR-Bildern als Eingangsdaten, um für jede Zelle der geografischen Region eine Klasse (6) zu berechnen, die indikativ dafür ist, dass die entsprechende Zelle entweder ein überflutetes städtisches Gebiet, ein überflutetes ländliches Gebiet oder ein nicht überflutetes Gebiet ist,
wobei der Deep-Learning-Klassifizierungsalgorithmus als voll gefaltetes neuronales Netz (16) strukturiert ist, der Deep-Learning-Klassifizierungsalgorithmus umfassend dynamische Parameter und statische Parameter, wobei die Werte der dynamischen Parameter anhand der städtischen Maske berechnet werden und die Werte der statischen Parameter mit optimalen Werten festgelegt werden, die am Ende der Trainingsstufe bestimmt werden, wobei die Trainingsstufe eine überwachte Trainingsstufe ist.

2. Verfahren nach Anspruch 1, wobei das vollständig gefaltete neuronale Netz eine **U-**Netz-Struktur aufweist, wobei eine Skip-Verbindung bei einer gegebenen Auflösung zwischen einer Kodierschicht (22ᵢ) eines Kodierers der U-Netz-Struktur und einer entsprechenden Dekodierschicht (42ᵢ) eines Dekodierers der U-Netz-Struktur ein städtisches Bewusstseinsmodul (18ᵢ) umfasst, das städtische Bewusstseinsmodul (18ᵢ) eine verfeinerte Merkmalskarte (94ᵢ) aus einer Merkmalskarte (24ᵢ) und einer städtischen Masken-Merkmalskarte (64_i) berechnet, wobei die Merkmalskarte (24ᵢ) von der Kodierschicht bereitgestellt wird, die verfeinerte Merkmalskarte (94ᵢ) auf die Dekodierschicht angewendet wird und die städtische Masken-Merkmalskarte von der städtischen Maske abgeleitet ist.

3. Verfahren nach Anspruch 2, wobei das vollständig gefaltete neuronale Netz ferner einen städtischen Kodierer (60) zum Berechnen der städtischen Masken-Merkmalskarte (64ᵢ) für jede Auflösung aus der städtischen Maske (4) umfasst, wobei der städtische Kodierer mit dem Kodierer (20) der U-Netz-Struktur identisch ist.

4. Verfahren nach einem der Ansprüche 2 bis 3, wobei das Modul (18ᵢ) bei einer gegebenen Auflösung ein Normalisierungsuntermodul (90) umfasst.

5. Verfahren nach Anspruch 4, wobei das Normalisierungsuntermodul (90) einen Skalierungsfaktor in die Merkmalskarte der Kodierschicht einführt.

6. Verfahren nach Anspruch 5, wobei das Normalisierungsuntermodul (90) Folgendes umfasst:
- einen ersten Block (91) zum Anwenden auf die Merkmalskarte nacheinander einer 3x3-Faltung, einer Stapelnormalisierung und einer ReLu-Funktion, um einen ersten Tensor zu erlangen;
- einen zweiten Block (92) zum Multiplizieren der städtischen Masken-Merkmalskarte (64ᵢ) mit dem ersten Tensor, um einen zweiten Tensor zu erlangen;
- einen dritten Block (93) zum Multiplizieren der Merkmalskarte mit dem zweiten Tensor, um einen dritten Tensor zu erlangen.

7. Verfahren nach Anspruch 6, wobei das Normalisierungsuntermodul (90) eine Verzerrung in die Merkmalskarte aus der Kodierschicht einführt.

8. Verfahren nach Anspruch 7, wobei das Normalisierungsuntermodul (90) Folgendes umfasst:
- einen vierten Block (96) zum Anwenden einer 3x3-Faltung auf die städtische Masken-Merkmalskarte (64ᵢ), um einen vierten Tensor zu erlangen; und
- einen fünften Block (95) zum Hinzufügen des dritten und vierten Tensors, um die verfeinerte Merkmalskarte (94ᵢ) zu erlangen.

9. Verfahren nach einem der Ansprüche 2 bis 8, wobei das städtische Bewusstseinsmodul (18ᵢ) bei einer gegebenen Auflösung ferner ein Kanalaufmerksamkeitsuntermodul (80) stromaufwärts von dem Normalisierungsuntermodul (90) umfasst, wobei das Kanalaufmerksamkeitsuntermodul (80) anhand der von der Codierschicht bereitgestellten Merkmalskarte eine Zwischenmerkmalskarte berechnet, die in das Normalisierungsuntermodul (80) eingegeben wird.

10. Verfahren nach Anspruch 9, wobei das Kanalaufmerksamkeitsuntermodul (80) Folgendes umfasst:
- einen ersten Block (81) zum Quetschen und Aggregieren der räumlichen Dimensionen der Merkmalskarte und zum Erlangen eines ersten Skalars;
- einen zweiten Block (82) zum Anwenden auf den ersten Skalar einer 1x1-Faltung, einer ReLu-Funktion, einer weiteren 1x1-Faltung und einer Sigmoid-Funktion, um einen zweiten Vektor zu erlangen;
- einen dritten Block (83) zum Multiplizieren der Merkmalskarte (24ᵢ) mit dem zweiten Vektor, um die Zwischenmerkmalskarte (84ᵢ) zu bestimmen.

11. Verfahren nach einem der Ansprüche 1 bis 10, wobei die städtische Maske (4) durch Verarbeiten geographischer Daten der geographischen Region definiert wird.

12. Verfahren nach einem der Ansprüche 1 bis 10, wobei die städtische Maske (4) durch Verarbeiten von SAR-Daten der geografischen Region definiert wird.

13. Verfahren nach einem der Ansprüche 1 bis 12, wobei die Vielzahl von SAR-Bildern (2) einen Satz von SAR-Bildern umfasst, der angefertigt ist aus:
- einem ersten SAR-Bild der Intensität zu einem aktuellen Zeitpunkt, definiert als der Modul der komplexen Größe von jedem Pixel der zum aktuellen Zeitpunkt erfassten SAR-Daten;
- einem zweiten SAR-Bild der Intensität zu einem ersten früheren Zeitpunkt, definiert als der Modul der komplexen Größe jedes von jedem Pixel der zum ersten früheren Zeitpunkt erfassten SAR-Daten;
- einem dritten SAR-Kohärenzbild zum aktuellen Zeitpunkt, definiert als die komplexe Kreuzkorrelation zwischen den zum aktuellen Zeitpunkt erfassten SAR-Daten und den zum ersten früheren Zeitpunkt erfassten SAR-Daten; und,
- einem vierten SAR-Bild der Kohärenz zum ersten vorhergehenden Zeitpunkt, definiert als die komplexe Kreuzkorrelation zwischen den SAR-Daten, die zum ersten vorhergehenden Zeitpunkt erfasst werden, und den SAR-Daten, die zu einem zweiten vorhergehenden Zeitpunkt, der vor dem ersten vorhergehenden Zeitpunkt liegt, erfasst werden.

14. Verfahren nach Anspruch 13, wobei der Satz von SAR-Bildern der Vielzahl von SAR-Bildern (2) ein erster Satz von SAR-Bildern ist, der anhand von Co-Polarisations-SAR-Daten berechnet wird, und wobei die Vielzahl von SAR-Bildern ferner einen zweiten Satz von SAR-Bildern umfasst, der dem ersten Satz von SAR-Bildern ähnlich ist, aber anhand von Kreuzpolarisations-SAR-Daten berechnet wird.

15. Computerprogrammprodukt, umfassend ein computerlesbares Programm, das einen Computer veranlasst, ein Verfahren zur Hochwassererkennung in nahezu Echtzeit in einer geografischen Region, die sowohl städtische Gebiete als auch ländliche Gebiete umfasst, nach einem der Ansprüche 1 bis 14 zu realisieren.

## Revendications

1. Procédé de détection d'inondations en temps quasi réel à grande échelle dans une région géographique couvrant des zones urbaines et des zones rurales, ledit procédé étant exécuté par ordinateur, la région géographique étant subdivisée en une pluralité de cellules adjacentes, **caractérisé en ce que** ledit procédé comprend une étape d'apprentissage et une étape d'opération, l'étape d'opération comprenant :
- le pré-traitement (312) de données de radar à synthèse d'ouverture (RSO) de la région géographique pour déterminer une pluralité d'images RSO (2) ;
- la définition (314) d'un masque urbain (4) de la région géographique, ledit masque urbain fournissant, pour chaque cellule, une probabilité que ladite cellule soit une zone urbaine ;
- l'application (316) sur la pluralité d'images RSO comme données d'entrée, d'un algorithme de classification d'apprentissage en profondeur, afin de calculer, pour chaque cellule de la région géographique, une classe (6) indiquant que la cellule correspondante est une zone urbaine inondée, une zone rurale inondée ou une zone non inondée,
l'algorithme de classification d'apprentissage en profondeur étant structuré comme un réseau neuronal entièrement convolutif (16), l'algorithme de classification d'apprentissage profond comprenant des paramètres dynamiques et des paramètres statiques, les valeurs des paramètres dynamiques étant calculées à partir du masque urbain et les valeurs des paramètres statiques étant définies avec des valeurs optimales déterminées à la fin de l'étape d'apprentissage, l'étape d'apprentissage étant une étape d'apprentissage supervisée.

2. Procédé selon la revendication 1, dans lequel le réseau neuronal entièrement convolutif a une structure U-Net, une connexion de saut à une résolution donnée entre une couche de codeur (22ᵢ) d'un codeur de la structure U-Net et une couche de décodeur (42ᵢ) correspondante d'un décodeur de la structure U-Net comprenant un module de connaissance urbaine (18ᵢ), le module de connaissance urbaine (18ᵢ) calculant une carte de caractéristiques affinée (94ᵢ) à partir d'une carte de caractéristiques (24ᵢ) et d'une carte de caractéristiques de masque urbain (64_i), la carte de caractéristiques (24ᵢ) étant fournie par la couche de codeur, la carte de caractéristiques affinée (94ᵢ) étant appliquée à la couche de décodeur, et la carte de caractéristiques de masque urbain étant dérivée du masque urbain.

3. Procédé selon la revendication 2, dans lequel le réseau neuronal entièrement convolutif comprend en outre un codeur urbain (60) pour calculer la carte de caractéristiques de masque urbain (64ᵢ) pour chaque résolution à partir du masque urbain (4), le codeur urbain étant identique au codeur (20) de la structure U-Net.

4. Procédé selon l'une quelconque des revendications 2 à 3, dans lequel le module de connaissance urbaine (18ᵢ) à une résolution donnée comprend un sous-module de normalisation (90).

5. Procédé selon la revendication 4, dans lequel le sous-module de normalisation (90) introduit un facteur d'échelle sur la carte de caractéristiques provenant de la couche de codeur.

6. Procédé selon la revendication 5, dans lequel le sous-module de normalisation (90) comprend :
- un premier bloc (91) pour appliquer successivement sur la carte de caractéristiques une convolution 3x3, une normalisation par lots et une fonction ReLu afin d'obtenir un premier tenseur ;
- un deuxième bloc (92) pour multiplier la carte de caractéristiques de masque urbain (64ᵢ) par le premier tenseur, afin d'obtenir un deuxième tenseur ;
- un troisième bloc (93) pour multiplier la carte de caractéristiques par le deuxième tenseur, afin d'obtenir un troisième tenseur.

7. Procédé selon la revendication 6, dans lequel le sous-module de normalisation (90) introduit un biais sur la carte de caractéristiques provenant de la couche de codeur.

8. Procédé selon la revendication 7, dans lequel le sous-module de normalisation (90) comprend :
- un quatrième bloc (96) pour appliquer une convolution 3x3 sur la carte de caractéristiques de masque urbain (64ᵢ) afin d'obtenir un quatrième tenseur ; et
- un cinquième bloc (95) pour ajouter les troisième et quatrième tenseurs afin d'obtenir la carte de caractéristiques affinée (94ᵢ).

9. Procédé selon l'une quelconque des revendications 2 à 8, dans lequel le module de connaissance urbaine (18ᵢ) à une résolution donnée comprend en outre un sous-module d'attention de canal (80) en amont du sous-module de normalisation (90), le sous-module d'attention de canal (80) calculant à partir de la carte de caractéristiques fournie par la couche de codeur, une carte de caractéristiques intermédiaire, entrée dans le sous-module de normalisation (80).

10. Procédé selon la revendication 9, dans lequel le sous-module d'attention de canal (80) comprend :
- un premier bloc (81) pour comprimer et agréger les dimensions spatiales de la carte de caractéristiques et obtenir un premier scalaire ;
- un deuxième bloc (82) pour appliquer sur le premier scalaire une convolution 1x1, une fonction ReLu, une autre convolution 1x1 et une fonction sigmoïde afin d'obtenir un second vecteur ;
- un troisième bloc (83) pour multiplier la carte de caractéristiques (24ᵢ) par le second vecteur pour déterminer la carte de caractéristiques intermédiaire (84ᵢ).

11. Procédé selon l'une quelconque des revendications 1 à 10, dans lequel le masque urbain (4) est défini en traitant des données géographiques de la région géographique.

12. Procédé selon l'une quelconque des revendications 1 à 10, dans lequel le masque urbain (4) est défini en traitant des données RSO de la région géographique.

13. Procédé selon l'une quelconque des revendications 1 à 12, dans lequel la pluralité d'images RSO (2) comprend un ensemble d'images RSO constitué par :
- une première image RSO d'intensité à un instant actuel, définie comme le module de la quantité complexe pour chaque pixel des données RSO acquises à l'instant actuel ;
- une deuxième image RSO d'intensité à un premier instant précédent, définie comme le module de la quantité complexe pour chaque pixel des données RSO acquises au premier instant précédent ;
- une troisième image RSO de cohérence à l'instant actuel, définie comme l'intercorrélation complexe entre les données RSO acquises à l'instant actuel et les données RSO acquises au premier instant précédent ; et,
- une quatrième image RSO de cohérence au premier instant précédent, définie comme l'intercorrélation complexe entre les données RSO acquises au premier instant précédent et les données RSO acquises à un second instant précédent, antérieur au premier instant précédent.

14. Procédé selon la revendication 13, dans lequel l'ensemble d'images RSO de la pluralité d'images RSO (2) est un premier ensemble d'images RSO calculé à partir de données RSO de copolarisation et dans lequel la pluralité d'images RSO comprend en outre un second ensemble d'images RSO, identique au premier ensemble d'images RSO, mais calculé à partir de données RSO de polarisation croisée.

15. Produit de programme informatique comprenant un programme lisible par ordinateur pour amener un ordinateur à exécuter un procédé de détection d'inondations en temps quasi réel dans une région géographique couvrant à la fois des zones urbaines et des zones rurales selon l'une quelconque des revendications 1 à 14.
